(19) **Europäisches Patentamt**
**European Patent Office**
**Office européen des brevets**

(11) Veröffentlichungsnummer: **0 313 824 B1**

## EUROPÄISCHE PATENTSCHRIFT

(45) Veröffentlichungstag der Patentschrift: **08.01.92**

(51) Int. Cl.⁵: **A22C 21/00**

(21) Anmeldenummer: **88115683.0**

(22) Anmeldetag: **23.09.88**

(54) **Vorrichtung zum Enthäuten von Geflügelkörpern.**

(30) Priorität: **28.10.87 DE 3736401**

(43) Veröffentlichungstag der Anmeldung:
**03.05.89 Patentblatt 89/18**

(45) Bekanntmachung des Hinweises auf die Patenterteilung:
**08.01.92 Patentblatt 92/02**

(84) Benannte Vertragsstaaten:
**AT BE CH DE ES FR GB IT LI LU NL SE**

(56) Entgegenhaltungen:
**EP-A- 0 118 963**
**EP-A- 0 244 887**
**NL-A- 8 302 207**
**US-A- 4 610 051**

(73) Patentinhaber: **NORDISCHER MASCHINENBAU RUD. BAADER GMBH + CO KG**
**Geniner Strasse 249**
**W-2400 Lübeck(DE)**

(72) Erfinder: **Callsen, Hans**
**Am Bormbrook 2**
**W-2407 Bad Schwartau(DE)**
Erfinder: **Muuss, Peter**
**Brolingstrasse 16**
**W-2400 Lübeck(DE)**

## Beschreibung

Die Erfindung betrifft eine Vorrichtung zum Enthäuten von Geflügelkörpern bzw. Teilen davon, insbesondere von durch einen zwischen den unteren und den oberen Extremitäten quer durch das Rückgrat gelegten,im wesentlichen senkrecht zur Symmetrieebene verlaufenden Querschnitt gewonnenen Bruststücken , bei welchen auch die oberen Extremitäten entfernt sind, mit einem Enthäutewerkzeug bestehend aus einem Paar gegensinnig umlaufend angetriebener Zahnwalzen mit miteinanderkämmenden Zahnstegen.

Derartige Vorrichtungen sind aus dem Stand der Technik bekannt. Beim praktizierten Stand sind sowohl autarke als auch in Bearbeitungslinien integrierte Vorrichtungen im Einsatz, bei denen das Enthäutewerkzeug aus einem Paar gegensinnig umlaufend angetriebener zylindrischer Zahnwalzen mit miteinander kämmenden steilgängigen Zahnstegen besteht. Zum Enthäuten werden die Geflügelkörper mit dem Kämmspalt dieser Zahnwalzen in Kontakt gebracht so daß die Haut durch fortlaufenden Einzug entfernt wird. Dabei erweist sich als nachteilig, daß der Enthäutevorgang häufig nicht spontan erfolgt, sondern der Angriff des Werkzeuges durch Kanten und Wenden des Geflügelkörpers gesucht werden muß. Das hat seine Ursache darin, daß der fördernde Kämmspalt gegenüber der durch die gemeinsame Tangentenebene an die Zahnwalzen definierten Auflagefläche des Geflügelkörpers etwa um das Maß des Radius' der Zahnwalzen zurückliegt und demzufolge der Geflügelkörper entsprechend deformiert werden muß, um den Enthäutevorgang einzuleiten. Desweiteren ist nachteilig, daß die Haut bei diesem Vorgang zerstört wird, was dem Bestreben zuwiderläuft, diese als zusammenhängende eßbare Hülle für verschiedene Nahrungsmittelprodukte verwendbar zu halten.

Eine solche die eingangsbeschriebenen Funktionselemente zeigende Vorrichtung ist der US-PS 4 610 051 zu entnehmen. Diese für das Entfernen der Haut von Putenschenkeln vorgesehene Vorrichtung weist zwei Paare von parallel nebeneinander angeordneten Zylinderwalzen mit schraubenförmig verlaufenden Zahnstegen auf, die kämmend ineinandergreifen. Die Putenschenkel werden auf einen Spieß aufgeschoben, derart, daß dieser zwischen der Haut und dem Schenkelfleisch eindringt, wobei sich letzteres oberhalb und die Haut unterhalb des Spießes befindet. Durch weiteres Aufschieben auf diesen gelangt der Putenschenkel in den Bereich eines über den Zylinder-Walzenpaaren angeordneten Förderers, welcher die Putenschenkel zunächst einer Schneideinrichtung zum Schlitzen der Haut und schließlich den Zylinder - Walzenpaaren zuleitet. Dabei gelangen die durch das Schlitzen und das Eindringen des Spießes gelösten Hautlappen in die Kämmspalte zwischen den Zylinderwalzen, so daß die Haut abgezogen wird.

Auch hierbei ist also keine zusammenhängende Hauthülle zu erzielen.

Es ist die Aufgabe der Erfindung, beim Enthäuten von Geflügelkörpern bzw. Teilen derselben einen zuverlässigen Angriff an der Haut zu gewährleisten und die Haut in einem Stück zu gewinnen.

Diese Aufgabe wird erfindungsgemäß dadurch gelöst, daß die Zahnwalzen kegelförmig ausgebildet sind. Dabei können die Zahnstege vorzugsweise schräg zu den Mantellinien der Zahnwalzenkegel verlaufen, und es kann mindestens eine der beiden Zahnwalzen angetrieben und von der anderen, um eine in der Nähe des größten Durchmessers derselben und senkrecht zu der Ebene der Achsen der Zahnwalzen angeordnete Achse, gegen die Kraft einer Feder schwenkend verdrängbar sein. Die Vorteile der erfindungsgemäßen Lösung liegen insbesondere darin, daß der fördernde Kämmspalt der Zahnwalzen infolge ihrer Kegelform im Bereich der Kegelspitzen praktisch in der gemeinsamen Tangentenebene an die Zahnwalzen liegt, so daß der Enthäutevorgang unmittelbar mit dem Kontakt mit der Haut ingangkommt. Dabei breitet sich das Einzugfeld in die Bereiche größerer Durchmesser der Zahnwalzen aus, so daß der Enthäutevorgang mit stetig wachsender Geschwindigkeit und damit schonend verläuft, sowie die Gewinnung der unzerstörten Haut aufgrund der Auseinanderdrängbarkeit der Zahnwalzen durch die Haut ermöglicht.

Das erfindungsgemäße Enthäutewerkzeug ist vorteilhaft in eine Vorrichtung integrierbar mit einem eine Umlaufebene definierenden Förderer mit Halterungen für die Aufnahme der Geflügelkörper bzw. von Teilen derselben unter Ausrichtung ihrer Symmetrieebene im wesentlichen parallel zu der Umlaufebene,und der Basisplatte des Brustbeins im wesentlichen parallel zu der Bahn des Förderers, wobei sie zweckmäßigerweise gekennzeichnet ist durch eine Anordnung der Zahnwalzen des Enthäutewerkzeuges neben der Bahn des Förderers derart, daß die Berührungslinie der Zahnwalzen in der Umlaufebene des Förderers liegt,wobei die dem Förderer zugekehrten Flanken der Zahnwalzen im wesentlichen parallel zu der Bahn und deren Kegelspitzen gegen die Laufrichtung des Förderers ausgerichtet sind.

Um eine Anpassung des Enthäutewerkzeuges an unterschiedliche Größen der Geflügelkörper zu ermöglichen, kann das Enthäutewerkzeug in der Umlaufebene des Förderers und unter Beibehaltung der Ausrichtung der Zahnwalzen verstellbar gehaltert sein, wobei die Halterung des Enthäutewerkzeuges durch zwei ein Parallelogramm bildende Lenker erfolgen kann.

Eine Automatisierung der Anpassung kann durch eine in der Umlaufebene des Förderers vor den Kegelspitzen der Zahnwalzen in die Bahn der Geflügelkörper ragende und von diesem verdrängbare Tasteinrichtung für eine jeweils an die Größe des zu bearbeitenden Geflügelkörpers bzw. Teils desselben angepaßte Steuerung der Arbeitsstellung des Enthäutewerkzeuges erreicht werden, wobei die Arbeitsstellung des Enthäutewerkzeuges vorzugsweise aus der jeweils maximalen Auslenkung der Tasteinrichtung hergeleitet wird. Gemäß einer vorteilhaften Ausgestaltung kann die Steuerung des Enthäutewerkzeuges durch ein mit dem Förderer bzw. dessen Halterungen synchron umlaufendes Kurvengetriebe erfolgen, wobei die jeweilige Arbeitsstellung des Enthäutewerkzeuges durch Absenkung desselben auf einen jeweils durch die Tasteinrichtung eingestellten Anschlag erreicht wird.

Die Erfindung wird nachfolgend anhand eines in der Zeichnung dargestellten Ausführungsbeispiels näher erläutert. Es zeigt

Fig. 1 eine schematische Ansicht der Vorrichtung zum Enthäuten in axonometrischer Darstellung,

Fig. 2 eine schematische Seitenansicht der Vorrichtung.

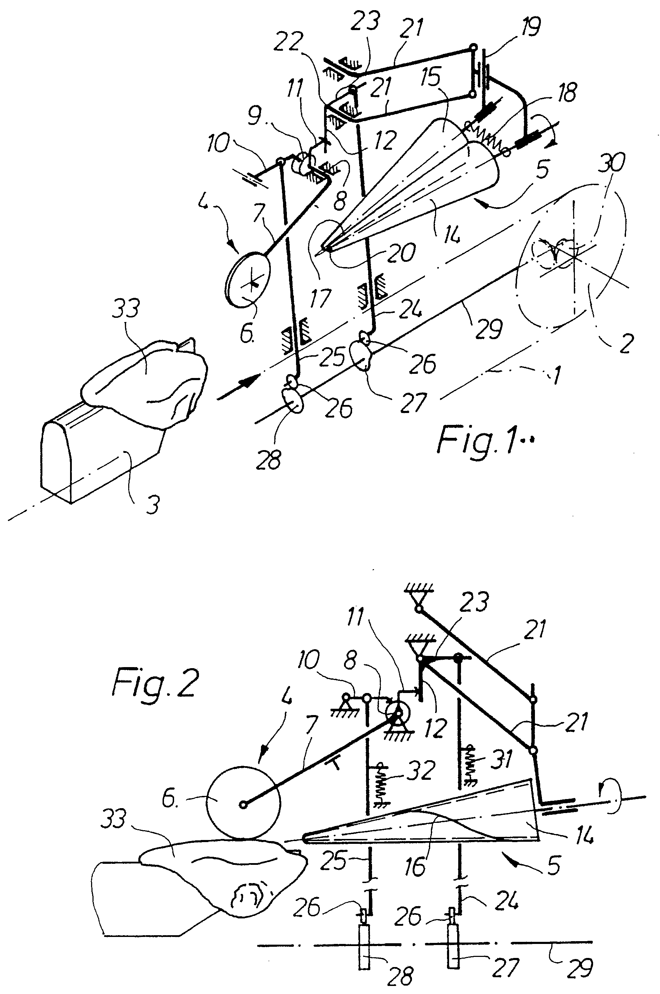

Die erfindungsgemäße Vorrichtung zum Enthäuten gemäß Fig. 1 ist auf einem nicht gezeigten Gestell aufgebaut, in welchem ein nur angedeutet gezeigter, durch zwei Umlenkräder 2 geführter Förderer 1, beispielsweise aus einer endlos umlaufenden Kette in geeigneter Weise angetrieben umläuft. Der Förderer 1 ist mit Halterungen in Form von Stützsätteln 3 bestückt, die die zu bearbeitenden Geflügelkörper 33 mit dem Brustbein in Förderrichtung unter Unterstützung an dessen Innenseite aufnehmen. Über der Bahn der Stützfläche der Stützsättel 3 befindet sich vor einem Enthäutewerkzeug 5 eine Tasteinrichtung 4. Sie umfaßt eine Tastrolle 6, die an einem Schwenkarm 7 angebracht ist, der gegen die Förderrichtung des Förderers 1 geneigt angeordnet ist und in der mit der Symmetrieebene des Geflügelkörpers 33 zusammenfallenden Umlaufebene des Förderers 1 um eine horizontale Achse 8 schwenkbar gelagert ist. Auf der Achse 8 befindet sich ein Freilauf 9, welcher eine Schwenkung der Tasteinrichtung 4 nach oben gestattet und der an seinem äußeren Umfang verzahnt ausgeführt ist. In diese Verzahnung greift ein als Drehsicherung für den Freilauf 9 wirksamer Arretierhebel 10.

Der Schwenkarm 7 setzt sich über die Achse 8 hinaus in einem Anschlaghebel 11 fort, der der Abstützung eines Hebelfortsatzes 12 des im folgenden beschriebenen Traggestänges für das Enthäutewerkzeug 5 dient. Dieses umfaßt zwei nebeneinander angeordnete, kegelförmige Zahnwalzen 14/15, deren Mantelflächen mit steilgängigen Zahnstegen 16 gegensinniger Steigung versehen sind. Die Zahnwalzen 14/15 sind mit ihren Zahnstegen 16 ineinandergreifend gelagert und so ausgerichtet, daß ihr die Berührungslinie bildender Kämmspalt 17 in der Umlaufebene des Förderers 1 liegt und die Tangentenebene an die nach unten weisenden Flanken der Zahnwalzen 14/15 senkrecht zu der Umlaufebene und parallel zu der Förderrichtung verläuft. Die Zahnwalze 14 ist auf geeignete Weise umlaufend angetrieben, wobei die Drehrichtung ein von unten nach oben wirksames Einzugsmoment ergibt. Der gegenseitige Eingriff der Zahnwalzen 14/15 erfolgt unter der Kraft einer Feder 18, wobei die Zahnwalze 15 um eine in der Nähe ihres größten Durchmessers befindliche senkrechte Achse 19 schwenkbar ist, so daß sich ein keilförmiger, an den Kegelspitzen 20 am weitesten klaffender Spalt einstellen kann, ohne daß der gegenseitige Eingriff im Bereich der großen Durchmesser verloren geht. Das Lagergehäuse der Zahnwalzen 14/15 ist an geschleppt angeordneten Parallelogramm-Lenkern 21 in der Umlaufebene des Förderers 1 beweglich, wobei einer der Lenker 21 auf seiner gestellseitigen Lenkerachse 22 den Hebelfortsatz 12 trägt, der sich wie oben beschrieben gegenüber dem Anschlaghebel 11 abstützt. An der Lenkerachse 22 ist ein weiterer Hebel 23 drehsicher befestigt, der in Richtung der Lenker 21 weist. Mit dem freien Ende des Hebels 23 sowie mit dem in die Verzahnung des Außenteils des Freilaufs 9 greifenden Arretierhebel 10 sind jeweils Koppelstangen 24 bzw. 25 verbunden, die sich mit Stützrollen 26 auf Kurvenscheiben 27 bzw. 28 abstützen. Diese befinden sich auf einer gemeinsamen Steuerwelle 29, die über ein Kegelradgetriebe 30 von einem der Umlenkräder 2 des Förderers 1 angetrieben wird, d. h. mit diesem synchron umläuft. Die Stützrollen 26 der Koppelstangen 24 u. 25 werden durch die Kraft von Federn 31 bzw. 32 auf den Kurvenscheiben 27 bzw. 28 gehalten.

Die Wirkungsweise der Vorrichtung ist folgende: Ein durch einen zwischen den unteren und den oberen Extremitäten quer durch das Rückgrat gelegten Schrägschnitt vorbereitetes Bruststück eines Geflügelkörpers 33 wird nach Entfernen der Flügel mit dem Brustbein nach oben und dem Halsteil voraus auf den Stützsattel 3 gestülpt. Im Fortgang der Förderung unterläuft der aufgesattelte Geflügelkörper 33 zunächst die Tastrolle 6 der Tasteinrichtung 4 und verdrängt diese unter Hochschwenken des Schwenkarmes 7 um die Achse 8 bis zu einem der Maximaldicke des Bruststückes entsprechenden Höchstmaß. Mit der Hochschwenkbewegung hat sich der auf der Achse 8 des Schwenkarmes 7 befestigte Innenteil des Freilaufs 9 relativ zu dessen Außenteil entsprechend verdreht, das während dieses Vorganges fixiert ist. Die Fixierung des Außenteils des Freilaufs 9 erfolgt dabei durch den Arretierhebel 10 , dessen mit diesem verbundene Koppelstange 25 sich in dieser Phase mit ihrer Stützrolle 26 auf einem Abschnitt der Kurvenscheibe 28 abstützt, der eine Tiefstellung des Arretierhebels 10 erzeugt. Nach Durchgang des größten Dikkenmaßes des Bruststückes unter der Tastrolle 6 wird diese durch den an seinem Außenteil arretierten Freilauf 9 daran gehindert, der abfallenden Kontur des Bruststücks zu folgen, da in der sich daraus herleitenden Drehrichtung die Sperrwirkung des Freilaufs 9 einsetzt. Auf diese Weise nimmt der mit dem Schwenkarm 7 der Tasteinrichtung 4 starr verbundene Anschlaghebel 11 eine dem größten Dickenmaß des Bruststücks entsprechende Position ein. Inzwischen hat der Stützsattel 3 den Bereich des Enthäutewerkzeuges 5 erreicht, welches bis dahin vermittels der sich auf der Kurvenscheibe 27 über die Stützrolle 26 abstützenden Koppelstange 24 in Hochstellung gehalten worden war. Mit weiterem Verlauf des Stützsattels 3 , d. h. weiterer Drehung der Steuerwelle 29 tritt die Kurvenscheibe 27 mit einem Umfangsabschnitt kleinerer Radien in den Bereich der Stützrolle 26 , so daß eine Absenkung des Enthäutewerkzeuges 5 erfolgt. Diese Bewegung setzt sich solange fort, bis der mit dem unteren Lenker 21 des Traggestänges verbundene Hebelfortsatz 12 an dem Anschlaghebel 11 anliegt. Die Zahnwalzen 14 und 15 des Enthäutewerkzeuges 5 haben nun mit ihren unteren Flanken die Höhe der Tasteinrichtung 4 erreicht und beginnen im Bereich ihrer Kegelspitzen 20 die das Bruststück überziehende Haut in den Kämmspalt 17 einzuziehen. Während dieses Vorgangs setzt sich die Förderung fort, so daß die Haut zunehmend in Bereiche größerer Durchmesser der Zahnwalzen 14 und 15 gelangt, d. h. einer wachsenden Abzugsgeschwindigkeit unterworfen wird. Dabei bewirkt das ebenfalls wachsende Hautvolumen ein gegenseitiges Auseinanderdrängen der Zahnwalzen 14 und 15 unter einer durch die Feder 18 definierten Kraft, so daß eine Zerstörung der Haut vermieden wird. Nach Durchgang des Stützsattels 3 wird das Enthäutewerkzeug 5 über die Kurvenscheibe 27 wieder in die Hochstellung gebracht. Gleichzeitig wird der Arretierhebel 10 über die Kurvenscheibe 28 angehoben, wodurch die Tastrolle 6 unter Mitnahme des nunmehr freigegebenen Außenteils des Freilaufs 9 in ihre Grundstellung zurückfällt. Die neue Bereitschaftstellung der Tasteinrichtung 4 wird dadurch erreicht, daß der Arretierhebel 10 kurz vor Ankunft des nächsten Stützsattels 3 wieder in Eingriff mit der Verzahnung des Außenteils des Freilaufs 9 gebracht wird.

**Patentansprüche**

1. Vorrichtung zum Enthäuten von Geflügelkörpern bzw. Teilen davon, insbesondere von durch einen zwischen den unteren und den oberen Extremitäten quer durch das Rückgrat gelegten Querschnitt gewonnenen Bruststükken, bei welchen auch die oberen Extremitäten entfernt sind, mit einem Enthäutewerkzeug (5), bestehend aus einem Paar gegensinnig umlaufend angetriebener Zahnwalzen (14,15) mit miteinanderkämmenden Zahnstegen (16), **dadurch gekennzeichnet,** daß die Zahnwalzen (14 u. 15) kegelförmig ausgebildet sind.

2. Vorrichtung nach Anspruch 1 , **dadurch gekennzeichnet,** daß die Zahnstege (16) schräg zu den Mantellinien der Zahnwalzenkegel (14,15) verlaufen.

3. Vorrichtung nach Anspruch 1 oder 2 , **dadurch gekennzeichnet,** daß mindestens eine der beiden Zahnwalzen (14 u. 15) angetrieben und von der anderen um eine in der Nähe des größten Durchmessers derselben und senkrecht zu der Ebene der Achsen der Zahnwalzen (14 u. 15) angeordnete Achse (19) gegen die Kraft einer Feder (18) schwenkend verdrängbar ist.

4. Vorrichtung nach einem der Ansprüche 1 bis 3 , **dadurch gekennzeichnet,** daß ein eine Umlaufebene bestimmender Förderer (1) mit Halterungen (3) für die Aufnahme der Geflügelkörper (33) bzw. von Teilen derselben unter Ausrichten ihrer Symmetrieebene im wesentlichen parallel zu der Umlaufebene und der Basisplatte des Brustbeins im wesentlichen parallel zu der Bahn des Förderers (1) vorgesehen ist, daß die Berührungslinie der Zahnwalzen (14 u. 15) in der Umlaufebene des Förderers (1) liegt, und daß die dem Förderer (1) zugekehrten Flanken der Zahnwalzen im wesentlichen parallel zu der Bahn des Förderers und die Kegelspitzen (20) gegen die Laufrichtung des Förders (1) ausgerichtet sind.

5. Vorrichtung nach Anspruch 4 , **dadurch gekennzeichnet,** daß das Enthäutewerkzeug (5) in der Umlaufebene des Förderers (1) und unter Beibehalten der Ausrichtung der Zahnwalzen (14 u. 15) verstellbar gehaltert ist.

6. Vorrichtung nach Anspruch 5 , **dadurch gekennzeichnet,** daß die Halterung des Enthäutewerkzeuges (5) durch zwei ein Parallelogramm bildende Lenker (21) erfolgt.

7. Vorrichtung nach einem der Ansprüche 4 bis 6 , **gekennzeichnet durch** eine in der Umlaufebene des Förderers (1) vor den Kegelspitzen (20) der Zahnwalzen (14 u. 15) in die Bahn der Geflügelkörper (33) ragende und von diesem verdrängbare Tasteinrichtung (4) für eine jeweils an die Größe des zu bearbeitenden Geflügelkörpers (33) bzw. Teils desselben angepaßte Steuerung der Arbeitsstellung des Enthäutewerkzeuges (5)

8. Vorrichtung nach Anspruch 7 , **dadurch gekennzeichnet,** daß die Arbeitsstellung des Enthäutewerkzeuges (5) aus der jeweils maximalen Auslenkung der Tasteinrichtung (4) hergeleitet wird.

9. Vorrichtung nach einem der Ansprüche 4 bis 8, **dadurch gekennzeichnet,** daß die Steuerung des Enthäutewerkzeuges (5) durch ein mit dem Förderer (1) bzw. dessen Halterungen (3) synchron umlaufendes Kurvengetriebe erfolgt, wobei die jeweilige Arbeitsstellung des Enthäutewerkzeuges (5) durch Absenken desselben auf einen jeweils durch die Tasteinrichtung (4) eingestellten Anschlag (11) erreicht wird.

## Claims

1. Device for the skinning of poultry carcasses or parts thereof, in particular of breast pieces, which have been obtained by a transverse cut taken transversely through the back bone between the lower and the upper extremeties and in which also the upper extremeties are removed, with a skinning tool (5) consisting of a pair of toothed rollers (14, 15), which are driven to rotate in opposite sense, with intermeshing toothed webs (16), characterised thereby, that the toothed rollers (14 and 15) are constructed to be conical.

2. Device according to claim 1, characterised thereby, that the toothed webs (16) extend obliquely to the generatrices of the toothed roller cones (14, 15).

3. Device according to claim 1 or 2, characterised thereby, that at least one of both the toothed rollers (14 and 15) is driven and pivotably displaceable against the force of a spring by the other about an axis (19) arranged in the proximity of the largest diameter of the same and perpendicularly to the plane of the axes of the toothed rollers (14 and 15).

4. Device according to one of the claims 1 to 3, characterised thereby, that a conveyor (1) determining a plane of rotation and with mountings (3) for the reception of the poultry carcasses (33) or of parts of the same whilst orienting their plane of symmetry substantially parallelly to the plane of rotation and the base plate of the breast bone is provided substantially parallelly to the path of the conveyor (1), that the line of contact of the toothed rollers (14 and 15) lies in the plane of rotation of the conveyor (1) and that the flanks of the toothed rollers, which face the conveyor (1), are oriented substantially parallelly to the path of the conveyor and the cone tips (20) are oriented towards the running direction of the conveyor (1).

5. Device according to claim 4, characterised thereby, that the skinning tool (5) is mounted in the plane of rotation of the conveyor (1) and to be adjustable while maintaining the orientation of the toothed rollers (14 and 15).

6. Device according to claim 5, characterised thereby, that the mounting of the skinning tool (5) takes place through two guide rods (21) forming a parallelogram.

7. Device according to one of the claims 4 to 6, characterised by a feeler equipment (4), which in the plane of rotation of the conveyor (1) and in front of the cone tips (20) of the toothed, rollers (14 and 15) projects into the path of the poultry carcasses (33) and is displaceable by these, for a control of the operative setting of the skinning tool (5) in adaptation to the respective size of the poultry carcass (33) or part thereof to be processed.

8. Device according to claim 7, characterised thereby, that the operative setting of the skinning tool (5) is derived from the respective maximum deflection of the feeler equipment (4).

9. Device according to one of the claims 4 to 8, characterised thereby, that the control of skinning tool (5) takes place by a cam gear which rotates synchronously with the conveyor (1) or its mountings (3), wherein the respective operative setting of the skinning tool (5) is achieved through lowering of the same onto an abutment (11) set each time by the feeler equipment (4).

## Revendications

1. Dispositif pour enlever la peau de corps de volailles ou de parties de ceux-ci, notamment de morceaux de carcasse obtenus par une découpe transversale entre les extrémités supérieures et inférieures, passant transversalement au travers de l'épine dorsale, les extrémités supérieures ayant été aussi retirées, le dispositif comportant un outil écorcheur (5) composé d'une paire de rouleaux dentés (14,15) entraînés en rotation selon des sens inverses et dont les filets de dents (16) engrenent mutuellement, caractérisé en ce que les rouleaux dentés (14 et 15) sont de configuration conique.

2. Dispositif selon la revendication 1, caractérisé en ce que les filets de dents (16) s'étendent de manière inclinée par rapport aux génératrices des cônes de rouleaux dentés (14,15).

3. Dispositif selon la revendication 1 ou 2, caractérisé en ce qu'au moins l'un des deux rouleaux dentés (14 et 15) peut être entraîné et est susceptible d'être repoussé pour s'écarter de l'autre à l'encontre de la force d'un ressort (18), par pivotement autour d'un axe (19) disposé à proximité du diamètre le plus grand des rouleaux dentés, et perpendiculaire au plan des axes des rouleaux dentés (14 et 15).

4. Dispositif selon l'une des revendications 1 à 3, caractérisé en ce qu'il est prévu un transporteur (1) définissant un plan de révolution et pourvu de supports (3) destinés à recevoir les corps de volailles (33) ou des parties de ceux-ci, avec une orientation de leur plan de symétrie sensiblement parallèle au plan de révolution et une orientation de la plaque de base du bréchet sensiblement parallèle à la voie de circulation du transporteur (1), en ce que la ligne de contact des rouleaux dentés (14 et 15) est située dans le plan de révolution du transporteur (1), et en ce que les flancs des rouleaux dentés tournés vers le transporteur (1) sont orientés de manière sensiblement parallèle à la voie de circulation du transporteur, les sommets de cône (20) étant orientés à l'encontre du sens de circulation du transporteur (1).

5. Dispositif selon la revendication 4, caractérisé en ce que l'outil écorcheur (5) est maintenu de manière réglable dans le plan de révolution du transporteur (1) tout en conservant l'orientation des rouleaux dentés (14 et 15).

6. Dispositif selon la revendication 5, caractérisé en ce que le maintien de l'outil écorcheur (5) se fait au moyen de deux biellettes (21) définissant un parallélogramme.

7. Dispositif selon l'une des revendications 4 à 6, caractérisé par un dispositif palpeur (4) qui s'engage dans la trajectoire du corps de volailles (33), dans le plan de révolution du transporteur (1) et à l'avant des sommets de cône (20) des rouleaux dentés (14 et 15), le dispositif palpeur (4) étant susceptible d'être repoussé par ce corps de volaille et destiné à commander la position de travail de l'outil écorcheur (5) en fonction chaque fois de la grandeur du corps de volaille (33), ou de partie de celui-ci, à traiter.

8. Dispositif selon la revendication 7, caractérisé en ce que la position de travail de l'outil écorcheur (5) est obtenue, dans chaque cas, a partir de la déviation maximale du dispositif à palpeur (4).

9. Dispositif selon l'une des revendications 4 à 8, caractérisé en ce que la commande de l'outil écorcheur (5) s'effectue à l'aide d'un mécanisme à cames tournant de manière synchrone avec le transporteur (1) ou ses supports (3), la position de travail respective de l'outil écorcheur (5) étant obtenue par son abaissement sur une butée (11) réglée dans chaque cas par le dispositif palpeur (4).

Fig. 1

Fig. 2